(19) Europäisches Patentamt
European Patent Office
Office européen des brevets

(11) **EP 3 460 984 A1**

(12) **EUROPÄISCHE PATENTANMELDUNG**

(43) Veröffentlichungstag:
**27.03.2019 Patentblatt 2019/13**

(21) Anmeldenummer: **17192677.7**

(22) Anmeldetag: **22.09.2017**

(51) Int Cl.:
**H02P 21/05** (2006.01)     **H02P 21/14** (2016.01)
**H02P 21/04** (2006.01)     **H02P 21/18** (2016.01)
**H02P 21/34** (2016.01)     **H02P 25/089** (2016.01)
**H02P 21/13** (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Siemens Aktiengesellschaft**
**80333 München (DE)**

(72) Erfinder:
• **Sinner, Harald**
  **90542 Eckental/Eckenhaid (DE)**
• **Weigel, Thilo**
  **90427 Nürnberg (DE)**

(54) **ÜBERWACHUNGSEINRICHTUNG FÜR EINE RELUKTANZMASCHINE UND VERFAHREN ZUR ÜBERWACHUNG**

(57) Eine Überwachungseinrichtung (19) für eine Reluktanzmaschine (4) weist einen Vektordreher (20) zur Drehung eines Raumzeigers (21), einen Tiefpassfilter (22) für den gedrehten Raumzeiger (21) und eine Signalauswertung (23) für das Ausgangssignal des Tief-passfilters (22) auf. Dies dient zur Überwachung der Reluktanzmaschine (4), wobei ein Raumzeiger (21) für den Fluss um eine negative Grundfrequenz transformiert wird und ein Gleichanteil überwacht wird.

## FIG 5

**Beschreibung**

Die Erfindung betrifft eine Reluktanzmaschine und deren Überwachung. Eine synchrone Reluktanzmaschine kann gesteuert oder geregelt betrieben werden.

Reluktanzmaschinen gibt es als Reluktanzmotor bzw. als Reluktanzgenerator. Zur Bestimmung der Position des Rotor (auch Läufer genannt) der Reluktanzmaschine kann ein Geber verwendet werden. Die Reluktanzmaschine kann aber auch geberlos betrieben werden.

Zur Bestimmung der Position des Rotors bei einer elektrischen Maschine kann beispielsweise auch eine feldorientierte Regelung herangezogen werden.

Aus der DE 197 03 248 A1 sind ein Verfahren und eine Vorrichtung zur Bestimmung einer Rotorwinkelgeschwindigkeit einer geberlosen, feldorientiert betriebenen Drehfeldmaschine bekannt.

Aus der EP 2 023 479 B1 ist ein System zur nahtlosen Geschwindigkeits- und/oder Lageermittlung einschließlich Stillstand bei einem Permanentmagnet-Läufer einer elektrischen Maschine bekannt. Es ist ein Verfahren zur Ermittlung einer elektrischen Antriebs-Geschwindigkeit und/oder -Lage aus einer Messung eines mehrphasigen Statorstroms beschrieben.

Aus der EP 2 226 929 A1 ist ein Plausibilitäts-Überwachungssystem für Bewegungsmessungen an einer elektrischen Antriebseinrichtung bekannt. Bei einem Verfahren zur Überwachung einer Bewegungsmessung an einer elektrischen Antriebseinrichtung auf Plausibilität wird die Bewegungsmessung eines Gebers überwacht. Anhand von Messungen von elektrischen Strömen in der Antriebseinrichtung werden ein oder mehrere Schätzwerte für die Lage, Geschwindigkeit und/oder Beschleunigung der Antriebseinrichtung erzeugt, wobei der oder die Schätzwerte auf Entsprechung mit einem oder mehreren, aus den Geber-Ausgangssignalen erzeugten Messwerten verglichen werden.

Eine Reluktanzmaschine, insbesondere ein synchrone Reluktanzmaschine, kann in einem geberlosen Betrieb eingesetzt werden. In dieser Betriebsart, dem geberlosen Betrieb, kann die Reluktanzmaschine gesteuert betrieben werden. Im gesteuerten Betrieb wird ein parametrierter Strom eingeprägt. Im gesteuerten Betrieb wird insbesondere ein Bereich niedriger Ausgangsfrequenzen durchfahren. Der Strom wird insbesondere so eingestellt, dass ein erwartetes Moment aufgebracht bzw. erzeugt werden kann. Ist die Amplitude des Stromes zu klein, wird der Rotor nicht wie gewünscht beschleunigt und der Reluktanzmotor kippt bzw. blockiert. Der Stromzeiger dreht sich über den Rotor und erzeugt beim Überstreichen der Drehmomentachse wechselweise ein positives und negatives Moment. Dies wird als "Rattern" wahrgenommen. Die Drehzahl bleibt im Mittel Null; der Rotor der Reluktanzmaschine, bzw. eine Welle, welche mit dem Rotor verbunden ist, blockiert also.

Eine Aufgabe der Erfindung ist es eine Reluktanzmaschine sicher zu betreiben.

Eine Lösung der Aufgabe ergibt sich bei einer Überwachungseinrichtung für einen Reluktanzmaschine nach Anspruch 1 bzw. bei einem Verfahren zur Überwachung einer Reluktanzmaschine nach Anspruch 5. Jeweilige Ausgestaltungen ergeben sich nach den Ansprüchen 1 bis 4 bzw. 6 bis 9.

Um ein "Rattern" im gesteuerten Betrieb zu vermeiden, kann eine Varianz des Strombetrages überwacht werden. Der Stromregler des Reluktanzmaschine kann allerdings bei kleinen Frequenzen die entstehenden Harmonischen (insbesondere die 2-fache Ständerfrequenz) gut ausregeln. Deswegen kann die Überwachung noch verbessert werden.

Im geregelten Betrieb kann die Differenz aus Soll- und Istfluss überwacht werden und so der Rotor überwacht werden. Auch durch Verwendung eines Gebers kann das Blockieren (Rattern) des Rotors, bzw. das Blockieren einer mit dem Rotor verbundenen Welle, erkannt werden.

Um ein Blockieren (Rattern) der Reluktanzmaschine bzw. des Rotors der Reluktanzmaschine zu erkennen gibt es eine weitere Möglichkeit. Dies betrifft insbesondere den gesteuerten Betrieb der Reluktanzmaschine.

Der Reluktanzmaschine ist ein Stromrichter zugeordnet. Zur Regelung und/oder Steuerung der Reluktanzmaschine ist eine feldorientierte Regelung/Steuerung bzw. ein Stromregler vorgesehen. Diese können zur Überwachung der Reluktanzmaschine mit herangezogen werden. Dreht ein Stromzeiger über eine stehende Welle, entsteht nach der folgenden Formel ein Flussanteil durch den komplexen und den konjugiert komplexen Stromzeiger:

$$\underline{\Psi} = \Psi_d + j\Psi_q$$

$$\underline{\Psi} = \left(L_{\Sigma}\underline{I} + L_{\Delta} \cdot \underline{I}^*\right)$$

$$L_{\Sigma} = 0.5 \cdot (L_d + L_q)$$

$$L_{\Delta} = 0.5 \cdot (L_d - L_q)$$

mit: $\underline{\Psi}$ für den Fluss (magnetischen Fluss)
d für eine d-Komponente
q für eine q-Komponente
L für die Induktivität

Eine Komponente des Flusses $\underline{\psi}$ dreht somit mit positiver Grundfrequenz $f_{FUND}$ und eine mit negativer Grundfrequenz $f_{FUND}$. Die Grundfrequenz ist die Frequenz des Stromzeigers.

Es werden elektrische Frequenzen (ständerbezogen) betrachtet. Die Frequenz des Flusses wird mit der Polpaarzahl auf die Ständerseite transformiert. Um den gewünschten Stromzeiger einzuregeln erzeugt der Stromregler einen Spannungszeiger, der einen Anteil mit negativ drehender Grundfrequenz erzeugt. Durch ein Transformieren des Raumzeigers in ein Koordinatensystem, das mit negativer Grundfrequenz dreht, werden alle Frequenzanteile um die Grundfrequenz verschoben. Der durch den konjugiert komplexen Strom entstehende Anteil wird damit zu einem Gleichanteil. Dieser Gleichanteil kann mit einem Tiefpass aus dem Signal gefiltert werden und zur Detektion der blockierten Welle verwendet werden. Hieraus ergibt sich folglich eine weitere Möglichkeit der Überwachung der Reluktanzmaschine.

Eine Überwachungseinrichtung für eine Reluktanzmaschine, weist einem Vektordreher zur Drehung eines Raumzeigers, einen Tiefpassfilter für den gedrehten Raumzeiger und eine Signalauswertung für das Ausgangssignal des Tiefpassfilters auf. Mittels dieser Überwachungseinrichtung kann eine stehende (ratternde) Welle bzw. Rotor erkannt werden.

In einer Ausgestaltung der Überwachungseinrichtung ist der Vektordreher ausgebildet um den Raumzeiger um eine negative Grundfrequenz zu drehen. So kann ermittelt werden, ob es einen Gleichanteil gibt.

In einer Ausgestaltung der Überwachungseinrichtung ist der Raumzeiger ein Spannungszeiger. Der Spannungszeiger korrespondiert mit dem Flusszeiger. Der Raumzeiger kann alternativ also auch der Flusszeiger sein.

In einer Ausgestaltung der Überwachungseinrichtung weist die Signalauswertung einen Betragsbildner und einen Schwellwertvergleicher auf. Durch den Tiefpass lässt sich ein Gleichanteil ermitteln. Von diesem Gleichanteil des Raumzeigers, welcher den Fluss oder die Spannung betrifft, wird der Betrag gebildet. Der Betrag kann dann mit einem Schwellwert verglichen werden. Ist der Betrag über dem Schwellwert wird ein Fehler erkannt. Es wird also ein Blockieren (Rattern) der Welle (des Rotors) erkannt.

Das Blockieren (Rattern) der Welle kann im Gegensatz zu einer Überwachung der Varianz des Stromes im ganzen Drehzahlbereich erkannt werden. Durch eine geeignete Fehlermeldung kann ein Betreiber der Reluktanzmaschine schneller auf eine fehlerhafte Parametrierung aufmerksam gemacht werden (z.B. auf einen zu geringen Anfahrstrom für den gesteuerten Betrieb).

Bei einem Verfahren zur Überwachung einer Reluktanzmaschine wird ein Raumzeiger für den Fluss bzw. für eine Spannung überwacht. Der Raumzeiger wird um eine Grundfrequenz transformiert. Die Transformation erfolgt insbesondere um die negative Grundfrequenz. Die Grundfrequenz entspricht insbesondere der vorgegebenen Drehzahl der Reluktanzmaschine. Dabei wird der Gleichanteil des transformierten Raumzeigers überwacht. Im regulären Betrieb ist dieser Gleichanteil Null bzw. nahezu Null. Der Gleichanteil erhöht sich, wenn der Rotor blockiert bzw. rattert.

In einer Ausgestaltung des Verfahrens wird nach der Transformation (insbesondere durchgeführt durch einen Vektordreher) der unter Umständen (also im Fall eines Blockierens bzw. Ratterns) vorhandene Gleichanteil mittels eines Tiefpasses erzeugt bzw. ermittelt.

In einer Ausgestaltung des Verfahrens wird der Gleichanteil mit einem Schwellwert verglichen und eine Fehlermeldung ausgegeben, wenn der Gleichanteil des vektortransformierten Raumzeigers den Schwellwert erreicht und/oder überschreitet. Hierfür kann in einer Ausgestaltung auch zusätzlich eine Hysterese verwendet werden.

In einer Ausgestaltung des Verfahrens wird die Reluktanzmaschine mit der Überwachung als geberlose Reluktanzmaschine betrieben. So kann ein sicherer Betrieb der Reluktanzmaschine kostengünstig ohne Geber erreicht werden.

In einer Ausgestaltung des Verfahrens wird die Reluktanzmaschine in einem gesteuerten Betrieb betrieben. Damit kann auch das Anfahren der Reluktanzmaschine sicher durchgeführt werden.

Die Erfindung sowie weitere Ausgestaltungen der Erfindung werden im Folgenden anhand von Ausführungsbeispielen in den Figuren näher erläutert. Es zeigen:

FIG 1      einen Blechschnitt eines Rotors einer Reluktanzmaschine;

FIG 2      eine Reluktanzmaschine mit einem Stromregler;

FIG 3      ein Zeigerdiagramm im Normalbetrieb;

FIG 4      ein Zeigerdiagramm im Fehlerfall (Blockieren bzw. Rattern des Rotors bzw. der Welle) und

FIG 5      eine Überwachungseinrichtung.

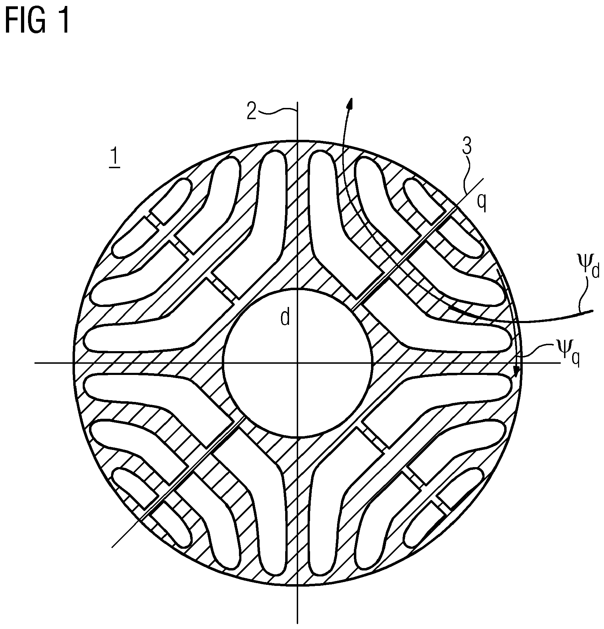

Die Darstellung nach FIG 1 zeigt einen Rotorblechschnitt 1 einer Reluktanzmaschine. Gezeigt ist ferner ein Pol 2 und eine Pollücke 3 zusammen mit den Achsen d und q des Flusses auf Grundlage der Park-Transformation. Die d-Achse betrifft den flussbildenden Anteil und die q-Achse betrifft den momentenbildenden Anteil des gesamten Flusses. Der Rotorblechschnitt 1 ist ein typisches exemplarisches Beispiel für einen Rotor einer Reluktanzmaschine. Neben dem Pol 2 und der Lücke 3, welche entsprechend die d-Achse und die q-Achse darstellen, ist auch der Fluss $\Psi_d$ und der Fluss $\Psi_q$ dargestellt.

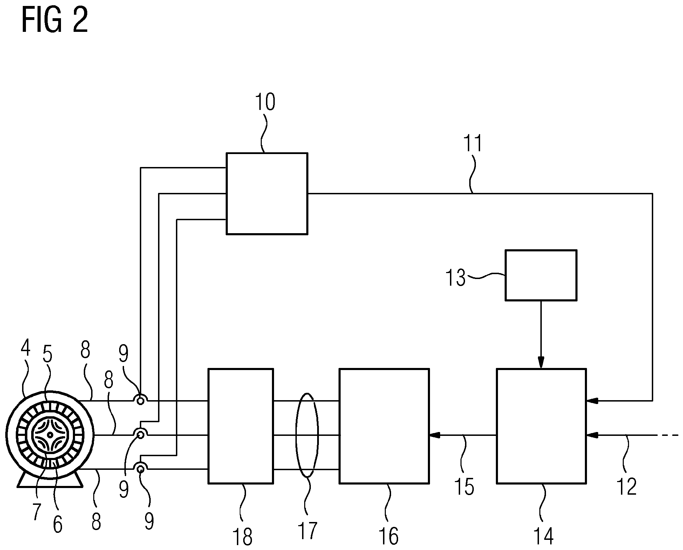

Die Darstellung nach FIG 2 zeigt eine Reluktanzmaschine 4 mit einem Stromregler 14. Damit ergibt sich ein vereinfachtes Blockschaltbild der Regelung der Reluktanzmaschine 4. Die Reluktanzmaschine 4 weist einen Stator 5 mit Statornuten 6 auf, in welchen Statorwicklungen eingefügt sind. Gezeigt ist ferner ein Rotor 7, dessen Blechschnitt angedeutet ist. Die Reluktanzmaschine 4 weist einen dreiphasigen Stromanschluss 8 auf.

Zur Messung eines Stromes bzw. einer Spannung für die Phasen des Stromanschlusses 8 ist ein dreiphasiger Messwertaufnehmer 9 vorgesehen. Die aufgenommenen Messwerte werden in einer Istwertverarbeitung 10 verarbeitet. Die Istwertverarbeitung 10 ergibt einen Stromistwert $\underline{I}$ aus. Dieser Stromistwert $\underline{I}$ ist ein Eingangswert des Stromreglers 14. Ein weiterer Eingangswert des Stromreglers 14 ist der Stromsollwert $\underline{I}_{soll}$ 12. Zudem weist der Stromregler 14 eine Verknüpfung mit einem Motormodell 13 auf. Ein Ausgangswert des Stromreglers 14 ist der Spannungssollwert $\underline{U}$ 15. Der Spannungssollwert $\underline{U}$ 15 ist eine Eingangsgröße einer Wechselrichtersteuerung 16. Die Wechselrichtersteuerung 16 hat als Ausgangsgrößen Ansteuersignale 17, welche einem Wechselrichter 18 zugeführt sind. Der Wechselrichter 18 dient der Speisung der Reluktanzmaschine 14 mit elektrischer Energie.

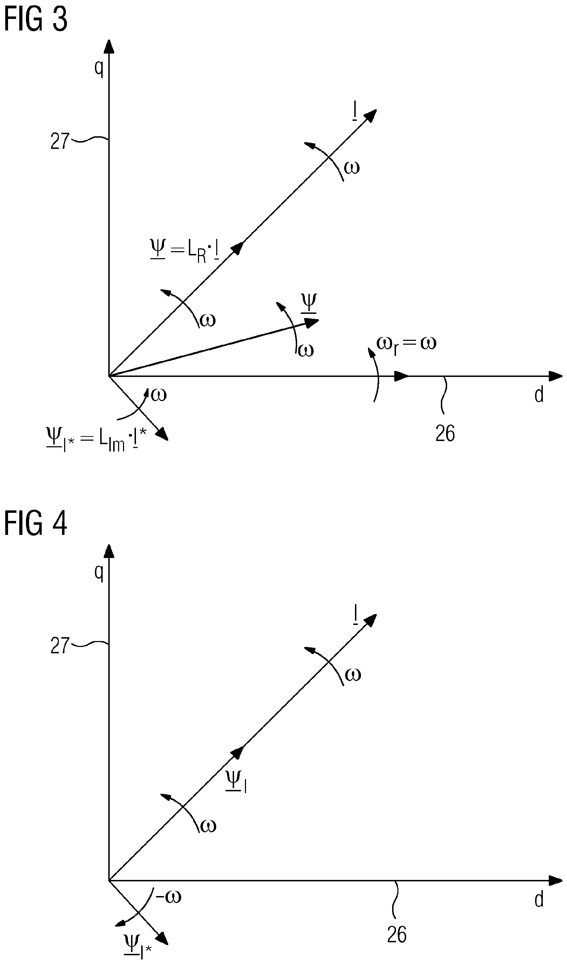

Die Darstellung nach FIG 3 zeigt ein Zeigerdiagramm für die Reluktanzmaschine, wobei im Zeigerdiagramm die Spannungszeiger nicht extra dargestellt sind. Der Spannungszeiger ergibt sich aus der zeitlichen Ableitung des Flusses und ist um 90° zum Flusszeiger verdreht. Das Zeigerdiagramm basiert auf der Darstellung der d-Achse 26 und der q-Achse 27. Dargestellt sind der Stromzeiger $\underline{I}$, der Fluss $\Psi_I$, der Fluss $\underline{\Psi}$ und der Fluss $\Psi_I{}^*$. Die Raumzeiger bewegen sich, wie dargestellt, mit der elektrischen Rotorwinkelgeschwindigkeit $\omega_r$. Bezüglich der dargestellten Werte ergeben sich folgende Gleichungen:

$$\omega_r = \omega$$

$$\Psi_I = L_R \cdot \underline{I}$$

$$\Psi_I{}^* = L_{Im} \cdot \underline{I}^*$$

Die Darstellung nach FIG 3 zeigt das Zeigerdiagramm der Reluktanzmaschine im bestimmungsgemäßen Betrieb. In einem Betriebszustand der Reluktanzmaschine nach FIG 3 ergibt sich kein Rattern bzw. Blockieren des Rotors. Unter Zugrundelegung der Gleichungen

$$\underline{\Psi} = \Psi_d + j\Psi_q$$

$$\underline{\Psi} = (L_\Sigma \underline{I} + L_\Delta \cdot \underline{I}^*)$$

$$L_\Sigma = 0.5 \cdot (L_d + L_q)$$

$$L_\Delta = 0.5 \cdot (L_d - L_q)$$

erschließt sich, dass sich die d-Achse mit dreht, wie auch der konjugiert komplexe Anteil des Flusses.

Die Darstellung nach FIG 4 zeigt ein weiteres Zeigerdiagramm mit den Achsen d 26 und q 27. Dargestellt ist ferner der Stromzeiger $\underline{I}$ mit der Winkelgeschwindigkeit $\omega$ und der auf diesem verlaufende Zeiger $\underline{\Psi}_I$ sowie der dazu um $-\omega$ verschobene Zeiger $\underline{\Psi}_I{}^*$. Im Unterschied zu der Darstellung nach FIG 3 zeigt die Darstellung nach FIG 4 nicht einen normalen Betriebszustand sondern den Fehlerfall, bei welchem die Welle bzw. der Rotor blockiert ist, also rattert. Der Flusszeiger $\underline{\Psi}_I$ rotiert mit der Winkelgeschwindigkeit $\omega$. Der Zeiger $\underline{\Psi}_I{}^*$ rotiert mit der Winkelgeschwindigkeit $-\omega$. Damit rotieren die Zeiger $\underline{\Psi}_I$ und $\underline{\Psi}_I{}^*$ in entgegengesetzte Richtungen. Hieraus ergibt sich ein Gleichanteil, welcher detektiert werden kann.

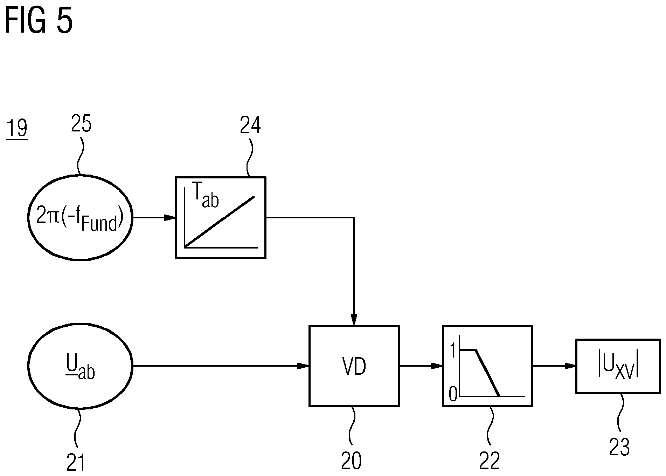

Die Darstellung nach FIG 5 zeigt eine Überwachungseinrichtung 19. Die Überwachungseinrichtung 19 dient der Überwachung der Reluktanzmaschine. Die Überwachungseinrichtung weist Eingangssignale 21 und 25 auf. Das Eingangssignal 21 ist ein Raumzeiger, insbesondere ein statorfester Spannungszeiger $\underline{U}_{ab}$ (Klemmenspannung des Motors). Das Eingangssignal 25 ist eine negative Kreisfrequenz $2\pi(-f_{Fund})$. Dabei ist die Grundfrequenz $f_{Fund}$ durch das negative Vorzeichen negiert. Die negative Kreisfrequenz 25 wird mittels einer Abtastung mit der Abtastfrequenz $T_{ab}$ abgetastet. Für einen Vektordreher 20 erfolgt mittels einer Winkelintegration 24 eine Integration des Eingangssignals 25 über die Abtastzeit. Das Ausgangssignal des Winkelintegrators 24 wird dem Vektordreher 20 zugeführt, welcher den Raumzeiger 21 dreht. Der mit der negativen Kreisfrequenz gedrehte Raumzeiger 21 wird durch einen Tiefpassfilter 22 geführt. Das Ausgangssignal des Tiefpassfilters 22 wird in einer Signalauswertung 23 weiter verarbeitet. Die Signalauswertung 23 ist beispielsweise ein Betragsbildner, wobei im vorliegenden Fall eine Betragsbildung der Komponenten des Spannungszeigers $|U_{XV}|$ im drehenden Koordinatensystem durchgeführt wird. Im Fehlerfall dreht sich die Komponente $L_\Sigma \underline{I}$ somit mit positiver Richtung und die Komponenten $L_\Delta \underline{I}^*$ mit negativer Richtung. Im Normalfall dreht die Komponente auch mit positiver Frequenz um.

**Patentansprüche**

1. Überwachungseinrichtung (19) für eine Reluktanzmaschine (4), mit einem Vektordreher (20) zur Drehung eines Raumzeigers (21) der Reluktanzmaschine (4), mit einem Tiefpassfilter (22) für den gedrehten Raumzeiger (21) und einer Signalauswertung (23) für das Ausgangssignal des Tiefpassfilters (22).

2. Überwachungseinrichtung (19) nach Anspruch 1, wobei durch den Vektordreher (20) der Raumzeiger (21) um eine negative Grundfrequenz der Reluktanzmaschine (4) gedreht ist.

**3.** Überwachungseinrichtung (19) nach Anspruch 1 oder 2, wobei der Raumzeiger (21) ein Spannungszeiger ist.

**4.** Überwachungseinrichtung (19) nach einem der Ansprüche 1 bis 3, wobei die Signalauswertung (23) einen Betragsbildner und einen Schwellwertvergleicher aufweist.

**5.** Verfahren zur Überwachung einer Reluktanzmaschine (4) wobei ein Raumzeiger (21) für den Fluss um eine negative Grundfrequenz transformiert wird und ein Gleichanteil überwacht wird.

**6.** Verfahren nach Anspruch 5, wobei der Gleichanteil mittels eines Tiefpasses erzeugt wird.

**7.** Verfahren nach Anspruch 5 oder 6, wobei die Reluktanzmaschine (4) geberlos betrieben wird.

**8.** Verfahren nach Anspruch 5 bis 7, wobei die Reluktanzmaschine (4) in einem gesteuert betrieben wird.

**9.** Verfahren nach einem der Ansprüche 5 bis 8, wobei eine Überwachungseinrichtung nach einem der Ansprüche 1 bis 4 verwendet wird.

FIG 1

FIG 2

FIG 3

FIG 4

FIG 5

**Europäisches Patentamt**
**European Patent Office**
**Office européen des brevets**

# EUROPÄISCHER RECHERCHENBERICHT

Nummer der Anmeldung

EP 17 19 2677

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2013 212876 A1 (BOSCH GMBH ROBERT [DE]) 8. Januar 2015 (2015-01-08) | 1 | INV. |
| A | * Zusammenfassung * * Absätze [0010], [0023] * * Anspruch 1 * | 2-9 | H02P21/05 H02P21/14 H02P21/04 H02P21/18 |
| | ----- | | H02P21/34 |
| A | US 2017/237376 A1 (SAEKI TAKAHIRO [JP]) 17. August 2017 (2017-08-17) * Zusammenfassung * * Absätze [0108], [0109] * * Abbildungen 2,10 * | 1-9 | H02P25/089 H02P21/13 |
| | ----- | | |
| A | DE 10 2006 008497 A1 (INT RECTIFIER CORP [US]) 31. August 2006 (2006-08-31) * Zusammenfassung * * Absatz [0022] * * Anspruch 1 * * Abbildung 3 * | 1-9 | |
| | ----- | | RECHERCHIERTE SACHGEBIETE (IPC) |
| A | US 2007/001635 A1 (HO EDDY YING Y [US]) 4. Januar 2007 (2007-01-04) * Zusammenfassung * * Absatz [0037] - Absatz [0039] * * Seite 2 * | 1-9 | H02P |
| | ----- | | |

Der vorliegende Recherchenbericht wurde für alle Patentansprüche erstellt

| Recherchenort | Abschlußdatum der Recherche | Prüfer |
|---|---|---|
| München | 6. März 2018 | Vanata, Daniela |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 17 19 2677

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-03-2018

| Im Recherchenbericht angeführtes Patentdokument | Datum der Veröffentlichung | Mitglied(er) der Patentfamilie | Datum der Veröffentlichung |
|---|---|---|---|
| DE 102013212876 A1 | 08-01-2015 | CN 105359404 A<br>DE 102013212876 A1<br>EP 3017536 A1<br>WO 2015000682 A1 | 24-02-2016<br>08-01-2015<br>11-05-2016<br>08-01-2015 |
| US 2017237376 A1 | 17-08-2017 | JP 6233428 B2<br>JP 2017143713 A<br>US 2017237376 A1 | 22-11-2017<br>17-08-2017<br>17-08-2017 |
| DE 102006008497 A1 | 31-08-2006 | CN 1829068 A<br>DE 102006008497 A1<br>JP 2006238692 A<br>US 2006193090 A1 | 06-09-2006<br>31-08-2006<br>07-09-2006<br>31-08-2006 |
| US 2007001635 A1 | 04-01-2007 | DE 102006030362 A1<br>JP 2007014198 A<br>KR 20070003708 A<br>US 2007001635 A1 | 11-01-2007<br>18-01-2007<br>05-01-2007<br>04-01-2007 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19703248 A1
- EP 2023479 B1
- EP 2226929 A1